# EUROPEAN PATENT SPECIFICATION

(11) **EP 2 873 853 B1**
(45) Date of publication and mention of the grant of the patent: **02.11.2016**
(21) Application number: 14193532.0
(22) Date of filing: 17.11.2014
(51) Int. Cl.: F03B 13/18

(54) **Plant for exploiting wave power, particularly for the production of electrical energy**
Anlage zur Nutzung von Wellenenergie, insbesondere zur Herstellung von elektrischer Energie
Installation pour exploiter l'énergie des vagues, en particulier pour la production d'énergie électrique

(30) Priority: 19.11.2013 IT GE20130113
(43) Date of publication of application: 20.05.2015
(73) Proprietor: Bozano, Enrico, 16148 Genova (IT)
(72) Inventor: Bozano, Enrico, 16148 Genova (IT)
(74) Representative: Porsia, Attilio

(56) References cited:
- JP-A- H01 100 384
- KR-A- 20070 115 104
- US-A1- 2006 242 954

## Description

The present invention refers to plants for exploiting ocean wave power, particularly for the production of electrical energy.

Reference is made to the following documents:
D1 = Jp H0110'0384 A
D2 = KR 2007 0115104 A
D3=US4883411
D4=US6388342
D5 = US 8 093 744

D1, which is regarded as being the prior art closest to the invention, discloses:
Plant for exploiting wave-power, particularly for the production of electrical energy, of the type that comprises a float connected with the movable lower component of a pumping unit which runs axially in a fixed body that draws from the sea and is designed to suck in water after lowering of the float and which, simultaneously with the raising of said float by the wave, pumps water and conveys it to operating equipment, whereby said float moves, guided laterally, in a guide tube, with its lower end immersed in the sea and the other end facing upwards, fixed to any suitable support means and provided laterally with at least one window positioned at sea level, in which said float is normally located and through which the wave enters to rise and lower the same float which is axially integral with a movable duct which extends downwards to draw water from the sea through suction valve means, and which axially crosses said float to allow entry into the same of a fixed pumping duct which, via discharge valve means, is connected at the top to a fixed pipe positioned on the upper end of said guide tube for delivery of the water pumped by said system of fixed and movable ducts operated by the float and provided with said valve means, it being provided that said fixed pipe and said fixed duct be sustained by a supporting structure.
D2 does disclose an axially movable duct extending downward and allowing the entrance in the float of a fixed duct connected through discharge valve means at his upper end to a fixed pipe having an elbow configuration.
D3 and D4 feature the use of at least one hydraulic pump of reciprocating type, vertically submerged, with its body anchored to fixed submerged supporting means and connected via the piston to a float which is raised and lowered by the wave movement, so that the latter provides it with the axial reciprocating motion necessary to suck water from the sea and pump it towards operating equipment, for example to drive a turbine connected to an alternator for the production of electrical energy. The float follows the horizontal component of the wave movement and therefore the pump body is usually anchored to the seabed by its lower end, so that the pump can oscillate to maintain its longitudinal axis always aligned with the float; said arrangement prevents deformations and wear of the stem, tie rod or cable which reciprocally connects the float and the pump piston and wear on the end of the pump body crossed by said stem, tie rod or cable.
From D5, in the name of the same applicant as the present patent application, a plant for the production of electricity by exploiting the wave movement is known according to which a float moves axially in a well positioned against or obtained inside the masonry work of a seawall and communicating with the open sea through an inlet; the wave flows into and out of said inlet, raising and lowering the float guided axially in said well, so that said float can be connected to the pump piston with a rigid stem and said pump can have a fixed position, also simplifying the return of the moving float-piston assembly to the low position due to gravity and simultaneously with the wave trough. With this construction it is possible to fully exploit the effect known as "clapotis" according to which the incoming wave reflected by a wall generates a clapotis wave having a double amplitude with respect to both the incoming wave and the return wave, thus making it possible to raise the float to a height that cannot be reached with the normal float systems, given the same wave height.

However, an essential condition for obtaining this surprising result is that the plant is resting against or obtained inside a vertical seawall. In the case of ports which have a seawall made of boulders (concrete tetrapods, concrete blocks or stone boulders) this system cannot be applied.

The object of the present invention is therefore to use, in the presence of boulder-type seawalls, a palisade consisting of tubes driven like posts into the seabed, so as to create a seawall made of tubes positioned in front of the boulder wall, said tubes housing the float motor system. According to the present invention, carrier tubes are used which can be driven into the seabed like posts, with a sufficiently tall portion protruding from the sea level and positioned alongside each other, to form a seawall positioned, for example, in front of a boulder seawall. In the presence of a vertical seawall, said supporting tubes can be fixed to the seawall masonry work and positioned on the front facing towards the open sea. Each carrier tube is provided, at the level of the water, with at least one window containing a float connected to a pumping unit positioned axially in the tube. According to a preferred embodiment, the float is fixed to the upper end of the body of a piston pump which, with its lower end, communicates with the inner chamber of the carrier tube and with the water that engages it via a unidirectional valve which opens and allows water in during the downward movement of the float. The pump piston has a hollow shape, its upper end is fixed to the top of the carrier tube, it is coaxially arranged in the latter and is connected to a delivery pipe for the pumped water via a unidirectional valve which opens during the float upstroke. According to a preferred embodiment, the carrier tube is provided with raised longitudinal guides on which the float moves, guided laterally; said guides can cross said window, also acting as a protective grille to prevent the entry of foreign bodies. Sluice gates can be provided to regulate opening of the window for entry of the wave into each carrier tube, to adapt the system to the different sea conditions and/or to different operating needs.

Further characteristics of the invention and the advantages arising therefrom will become clearer from the following description of some preferred embodiments of the same, illustrated purely by way of non-limiting example in the figures of the four attached drawings, in which:
- Fig. 1 is a lateral view with parts in section of a possible embodiment of a transformation module of a plant according to the invention, particularly in combination with a vertical seawall;
- Fig. 2 illustrates, enlarged and in section, the telescopic carrier complex of the module of the preceding figure, in the version for formation of a pump with one fixed component and the other connected to the float which exploits the wave movement;
- Fig. 3 illustrates details according to the cross section line III-III of the module of the preceding figures 1 and 2;
- Fig. 4 is a plan of the plant according to the invention which uses a plurality of transformation modules of the type in figure 1 or in the subsequent figure 5;
- Fig. 5 is a lateral view with parts in section of a further embodiment of a transformation module of a plant according to the invention, particularly in the combination with a boulder seawall;
- Fig. 6 illustrates schematically a working variation of a different on-site fixing system for 3 a transformation module as in figure 5;
- Figures 7 and 8 illustrate in longitudinal sections the relatively mobile parts of a transformation module, with different systems for the production of mechanical or electrical energy.

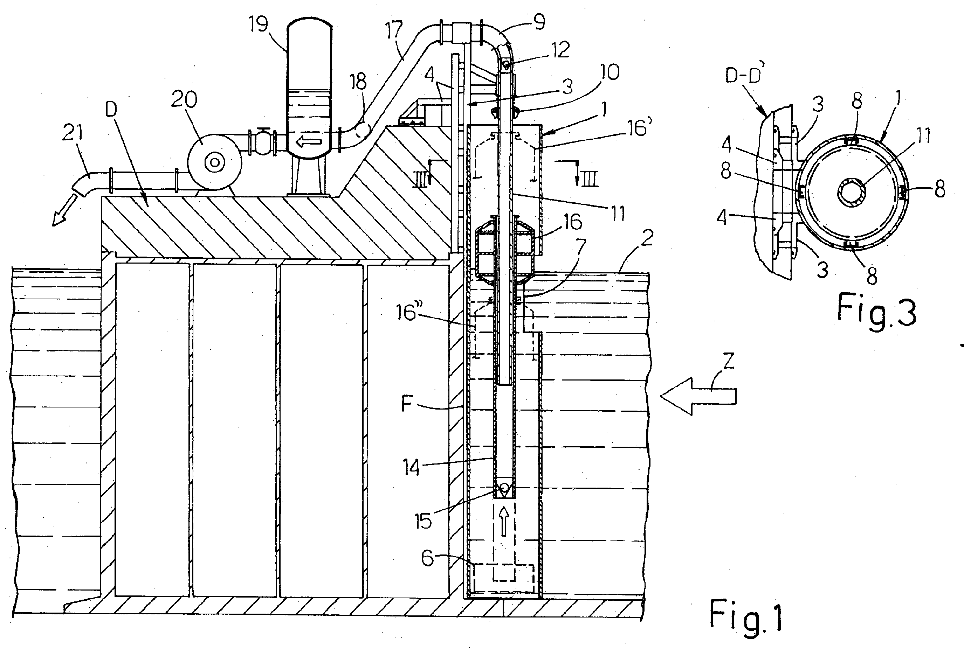

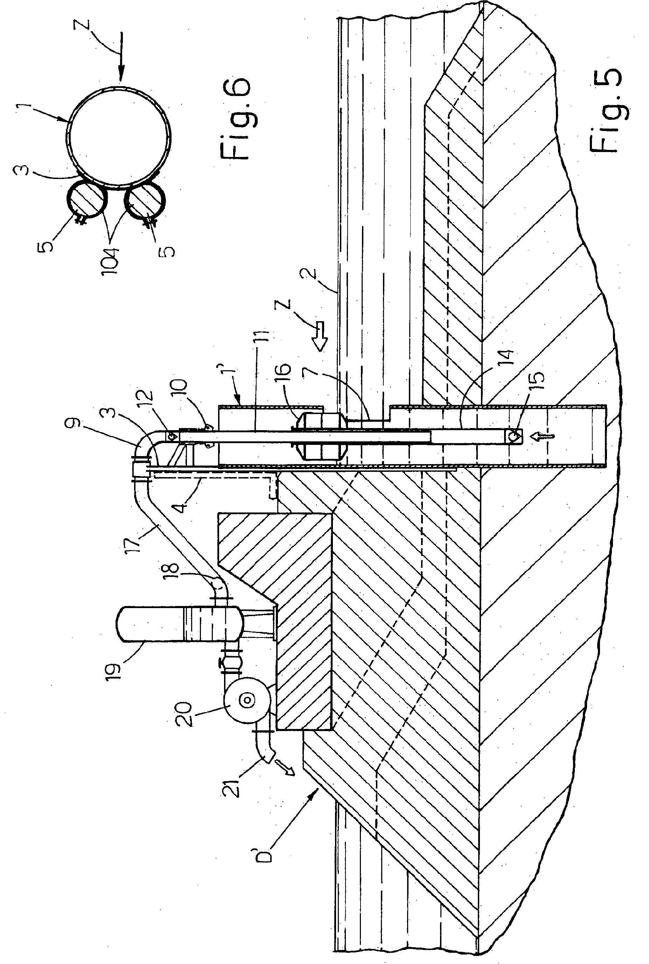

Figures 1 and 5 show that the invention comprises the use of tubes 1,1' preferably with round section or other suitable equivalent section, of large diameter, for example in the order of approximately 2.5-3 metres, made of any material suitable for the uses in question, preferably of prefabricated type; said tubes 1,1' are preferably positioned on the outer front of a seawall D, for example of the type with vertical front F as in figure 1, or on the outer front of a boulder seawall D' as in figure 5, and are long enough to rest with their lower end on the seabed, as in the example of figure 1, or for an appropriate portion thereof to be driven into the seabed, as illustrated for the tubes 1' of figure 5; said tubes 1,1' are characterised in that they protrude for an appropriate length from the sea level 2, so that their upper end is for example at approximately the same height as the top of the seawall D or D'.

The tubes 1,1' are provided on their outer lateral surface with a longitudinal facing structure 3 covering at least the section above sea level and which in the solution of figure 1 is fixed to a bracketing structure 4 fixed to the seawall D, to integrate the tubes 1 securely with it, while in the solution of figure 5, where the tubes 1' are driven in, the same bracketing structure 4 may not be provided, as indicated by the broken line. The variation of figure 6 illustrates that the tubes 1 can be permanently fixed on the outer front of a seawall of the first or second type, by means of foundation posts 5 securely driven into the seabed and to which said tubes 1 are fixed with their outer structure 3 and by means of anchors 104 appropriately shaped and distributed. In this variation the tubes 1 would not have to be driven into the ground and side openings 6, as in the example of figure 1, or openings also of bevelled type could be provided on the lower end of said tubes, allowing continuous outflow of the sand transported by the water; this would prevent the sand accumulating in the submerged part of the tube 1 engaged by a movable component of the transformation module according to the invention, described below, so that the operation of said movable component is not compromised.

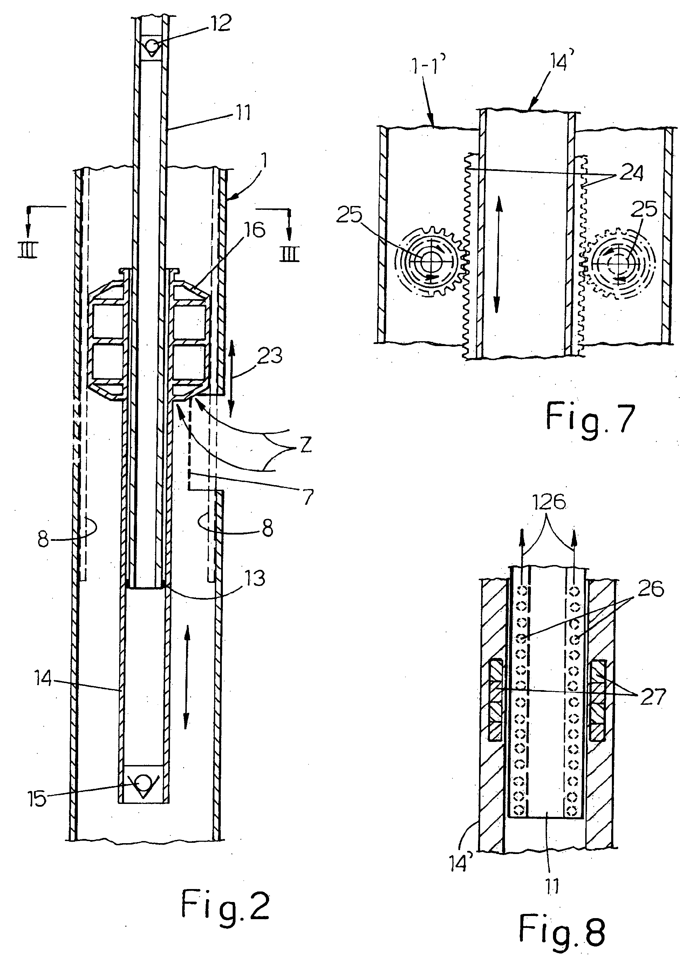

The tubes 1,1' are provided laterally with a window 7 facing towards the open sea, of height such as to be intersected by level 2 of the water in any tidal conditions, so that the wave movement can enter the tubes 1,1' through said window 7, as indicated by the arrows Z. According to a preferred embodiment of the invention, inside the tubes 1,1' raised longitudinal guides 8 (fig. 2,3) are fixed, in an appropriate number and symmetrically spaced from one another; said guides 8 are provided both on the submerged portion and the surfaced portion of the tubes 1,1' and a part of said guides 8 crosses the window 7 to perform not only the basic functions described below, but also to act as a protective grille for preventing the entry of foreign bodies 1 into the tube.

From figures 1 and 5 it can be seen that the structure 3 supports an elbow bend 9 which by means of a clamping device 10, also secured to said structure 3, is connected in a removable manner to a vertical duct 11, with the interposition of unidirectional valve means 12 which open automatically in the presence of a flow from the duct 11 to the elbow bend 9 and which automatically close in the presence of a contrary flow. The duct 11 is arranged axially in the tube 1 and has a length such as to extend beyond the window 7; a movable duct 14 slides over said window 7 telescopically, with minimum interference or with the possible interposition of seal means 13 (fig. 2); the lower end of said movable duct 14 is provided with a unidirectional valve 15 which opens in the presence of a flow entering said duct 14; at the upper end, it is integral with a float 16 tapered at the top and bottom which draws at sea level 2 and which with its base is normally located in the area of the side window 7 of the tube 1 or 1' to detect the wave movement. The float 16 has a round section and a width such as to cooperate with sufficient clearance with the guides 8, so as to slide easily over them and be arranged by the same with its axis substantially aligned with that of the tube 1 or 1'. The outer surface of the float can be covered with replaceable plastic rings (not illustrated) which facilitate sliding on the guides 8.

Figures 1, 16' and 16" indicate respectively the maximum upstroke and maximum downstroke of the float 16 in the tube 1 due to the action on the latter of the wave movement, hence the ducts 11 and 14 will be sized with an extension such as to allow said relative movement and so as not to interfere when the float 16 is fully raised. The valves 15 and 12 have been illustrated as unidirectional ball valves to facilitate comprehension of their locking and release function, but it is understood that in reality, more correctly, they will be of the diaphragm, butterfly, wafer or other type suitable for the purposes in question.

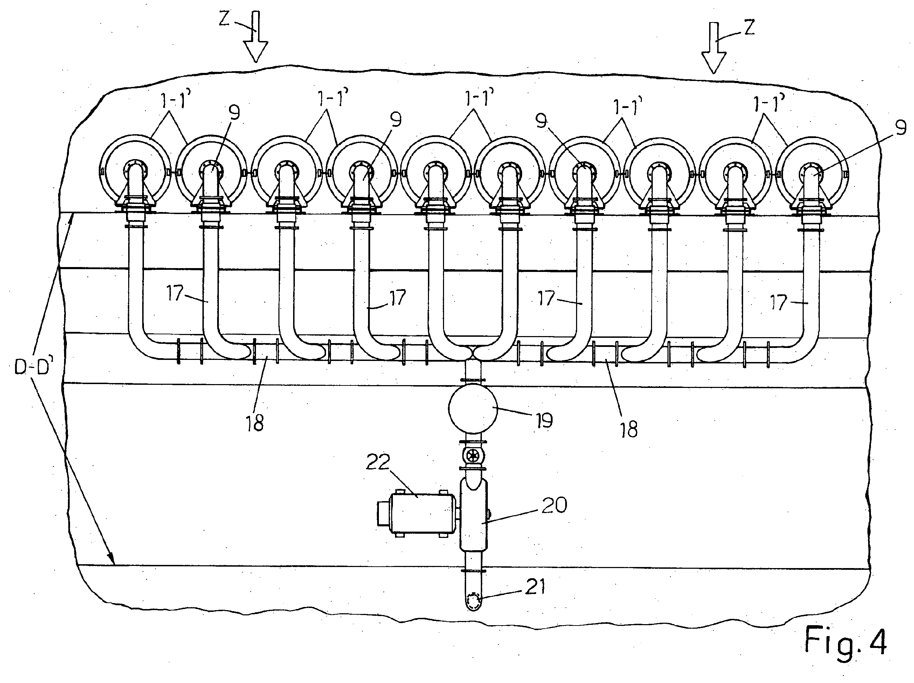

It is evident that, following the lowering and raising movement of the float 16 by the waves which enter the window 7 of the tubes 1,1', the volume of the inner chambers of the ducts 11,14 increases, sucking water from the valve 15, and decreases, pumping water through the valve 12 and elbow 9. As illustrated in the diagram of figure 4, said elbow 9 can be connected by means of branch lines 17 to a manifold 18 which can if necessary, via a hydropneumatic compensation unit 19, feed a turbine schematically indicated by 20, the discharge pipe 21 of which discharges downstream of the seawall D,D' and on the axis of which an electrical generator 22 is splined; all the critical components 19,20,22 are appropriately protected and housed in a specific structure associated in a known manner with the seawall and therefore not illustrated.

It should be noted that with the solution of figures 5 and 6 the plant can if necessary be detached from the seawall since the tubes 1',1 can themselves form a seawall with characteristics such as to support, alone or in combination with foundation posts of the type indicated by 5 in figure 6, the structure necessary to support and house the critical components 19,20,22 considered above with reference to figure 4.

The advantages deriving from the plant according to the invention with respect to those of the known art can be summarised as follows:
- the transformation module can be adapted to any type of seawall or, as said previously, can itself form a supporting seawall;
- inside the tube 1,1' of each transformation module the assembly formed of the float and pumping unit is housed, protected and maintained in the necessary condition of axial alignment;
- the presence of the longitudinal guides 8 guarantees self-centring of the float-pump system with respect to the axis of the tube 1,1', therefore the connection of said system to the upper support 3 is greatly simplified;
- the same float-pump system is supported in position only by the upper support 3, therefore it is possible to easily intervene at any time on said outer support to slide the system out of the tube 1,1' in order to overhaul it or replace it or to carry out any maintenance or cleaning inside the carrier tubes1,1';
- the submerged part of the tube 1,1' remains always full of water even with the wave trough and for this reason acts as an effective shock absorber and brake to descent of the float, particularly in the presence of very high waves, in which case the float does not follow the wave trough but stops beforehand; 6
- it is possible to provide on the tube 1, with a control from above which can easily be devised by a person skilled in the art in a manual or servo-controlled way, a sluice gate indicated schematically in figure 2 by the double arrow 23, to regulate the width of the opening of the window 7 in order to adapt operation of the plant to the variable sea conditions and to neutralise and protect the systems inside the tubes 1,1' also during storms.

It is understood that with the plant described it is possible to produce plants for the production of electrical energy which are alternative or combined with the hydroelectric plant considered before, for example with the solution of figure 7 which provides for the fixing of longitudinal racks 24 on the movable duct 14'; in this case a portion of the latter extends above the float 16 and cooperates with pinions 25 positioned above the water level, supported revolvingly by the tube 1,1' and via which the rotation can be transmitted to an electricity generator.

Another alternative system for the production of electrical energy is illustrated in figure 8 in which electrical coils 26 with relative terminals 126 are housed preferably in the fixed duct 11. An electrical current is generated in said electrical coils 26 due to the magnetic field induced by magnetic units 27 housed in the movable duct 14 which, also in this case, is provided with a portion 14' extending preferably above the float 16, so that the electromagnetic equipment 26,27 can be positioned outside the water.

It is understood that the description refers to preferred embodiments of the invention, to which numerous construction modifications can be made and technical equivalences introduced, without abandoning the underlying principle of the invention as described, illustrated and as claimed below. In the claims, the references shown in brackets are purely indicative and do not limit the protective scope of said claims.

## Claims

1. Plant for exploiting wave power, particularly for the production of electrical energy, comprising a float connected with the movable lower component of a pumping unit which runs axially in a fixed body that draws from the sea and is designed to suck in water after lowering of the float and which, simultaneously with the raising of said float by the wave, pumps water and conveys it to operating equipment, for example hydroelectric conversion means (20,22) wherein said float (16) moves, guided laterally, in a guide tube (1,1') with its lower end immersed in the sea and the other end facing upwards, fixed to any suitable support means and provided laterally with at least one window (7) positioned at sea level, in which said float is normally located and through which the wave enters to raise and lower the same float, said float being axially integral with a movable duct (14) which extends downwards to draw water from the sea through suction valve means (15) and which axially crosses said float to allow entry into the same of a fixed pumping duct (11) which, via discharge valve means (12), is connected at the top to a fixed pipe (9) positioned on the upper end of said guide tube (1,1') for delivery of the water pumped by said system of fixed and movable ducts (11,14) operated by the float (16) and provided with said valve means (12,15), it being provided that said fixed pipe (9) be shaped with an elbow shape, and that said pipe (9) and/or said fixed duct (11) be sustained by a supporting structure (3,10) positioned in the upper surfaced part of said guide tube (1,1'), so that by easily acting on said supporting structure (3,10) the pump-float assembly can be removed for maintenance and the inside of said guide tube (1,1') can be accessed for all maintenance and/or cleaning requirements.

2. Plant according to claim 1), wherein the guide tube (1,1') is provided externally and at least on the surfaced portion with a facing structure (3) designed to be fixed to a housing and supporting structure (4) in turn designed to be positioned and fixed on the outer front of the masonry work of a seawall (D) with vertical front (F).

3. Plant according to claim 1), wherein the guide tube (1,1') is provided externally and at least on the surfaced portion with a facing structure (3) designed to be fixed to a housing and supporting structure (104) fixed on foundation posts (5) securely driven into the seabed, preferably on the outer front of a seawall made of boulders (D').

4. Plant according to claim 1), wherein the guide tube (1) is driven into the seabed, preferably on the outer front of a seawall made of boulders (D'), so that it is securely fixed in the position of use, with or also without any structural connection to said seawall (D').

5. Plant according to claim 1), wherein the guide tube (1,1') is provided at the bottom with openings (6) to limit or avoid the deposit of sand in the immersed portion of said guide tube and/or to facilitate periodic internal cleaning of said guide tube (1,1').

6. Plant according to claim 1), wherein the guide tube (1,1') is provided internally with longitudinal guides (8) extending through both the surfaced and immersed portion of said guide tube and on which the float (16) moves, guided axially; said float (16) can be externally provided with parts having a low friction coefficient, replaceable, to facilitate the movement of said float on said guides (8).

7. Plant according to claim 6), wherein said guides (8) partly cross the opening of said window (7) for inlet of the wave into the guide tube (1,1') and act as a protective grille or supports for said grille which prevents the entry of foreign bodies into the guide tube (1,1').

8. Plant according to claim 1), wherein said movable (14) and fixed (11) ducts of the pumping unit can be used to produce mechanical energy for any use, exploiting the rectilinear and relative mobility of said ducts and any mechanism that allows said rectilinear movement to be converted into a rotatory movement, for example with a rack (24) and pinion (25) mechanism.

9. Plant according to claim 1), wherein said movable (14) and fixed (11) ducts of the pumping unit can be used to produce electrical energy, exploiting the rectilinear and relative mobility of said ducts and any equipment that allows said rectilinear movement to be converted into electrical energy, for example via an electromagnetic apparatus with preferably fixed coils (26) and mobile magnets (27).

10. Plant according to claim 1), wherein at least one sluice gate (23) is provided on the guide tube (1,1') in the area of the lateral window (7), with the possibility of manual or servo-controlled movement, to regulate the width of the opening of said window (7), to adapt the operation of the plant to the variable sea conditions and to neutralise and protect the systems inside the guide tubes (1,1') also in heavy seas.

## Patentansprüche

1. Eine Anlage zur Nutzung von Wellenenergie, insbesondere zur Herstellung von elektrischer Energie, welche einen Schwimmer umfasst, der mit dem beweglichen unteren Bestandteil einer Pumpeinheit verbunden ist, die axial in einem feststehenden Körper funktioniert, aus dem Meer schöpft und so konstruiert ist, dass nach Absenkung des Schwimmers Wasser eingesaugt wird, und welche gleichzeitig mit dem Anheben des genannten Schwimmers durch die Welle Wasser einpumpt und es jeweils zu der entsprechenden Betriebseinrichtung befördert, beispielsweise Elemente zur hydroelektrischen Umformung (20, 22), wobei der genannte Schwimmer (16) sich seitlich geführt in einem Führungsrohr (1, 1') bewegt, und zwar mit seinem unteren Ende in das Meer getaucht und mit dem anderen Ende nach oben gerichtet, jeweils befestigt an beliebigen Halterungselementen und seitlich mit mindestens einem Fenster (7) ausgerüstet, welches sich auf Meeresebene befindet, in dem der genannte Schwimmer gewöhnlich angeordnet ist und durch das die Welle einströmt, um diesen Schwimmer zu heben und zu senken, wobei der genannte Schwimmer axial einteilig mit einer beweglichen Rohrleitung (14) ist, welche sich nach unten erstreckt, um über entsprechende Ventilelemente (15) Wasser aus dem Meer zu saugen, und welche dabei axial den genannten Schwimmer kreuzt, um das Eintreten einer feststehenden Pumprohrleitung (11) dort hinein zu gestatten, die über entsprechende Abflussventilelemente (12) an der Spitze mit einem feststehenden Rohr (9) verbunden ist, das am oberen Ende des genannten Führungsrohrs (1, 1') zur Lieferung des Wassers angeordnet ist, welches durch dieses System feststehender und beweglicher Rohrleitungen (11, 14) eingepumpt wird, die durch den Schwimmer (16) angetrieben werden, und die mit den genannten Ventilelementen (12, 15) ausgerüstet ist, wobei vorgesehen ist, dass das genannte feststehende Rohr (9) die Form eines Kniestücks aufweist, und dass das genannte Rohr (9) und/oder die genannte feststehende Rohrleitung (11) jeweils durch ein entsprechendes Tragstruktur (3, 10) gehalten werden, welches sich am oberen beschichteten Teil des genannten Führungsrohrs (1, 1') befindet, so dass die Pumpen-Schwimmereinheit durch einfaches Betätigen der genannten Tragstruktur (3, 10) zwecks Wartung entfernt werden kann und auf das Innere des genannten Führungsrohrs (1, 1') für sämtliche Wartungs- und/oder Reinigungserfordernisse problemlos zugegriffen werden kann.

2. Eine Anlage gemäß Anspruch 1), wobei das Führungsrohr (1, 1') außen und zumindest an dem beschichteten Abschnitt mit einer gegenüberliegenden Struktur (3) ausgerüstet ist, die so konstruiert ist, dass sie an einer Gehäuse- und Tragstruktur (4) befestigt werden kann, welche wiederum so konstruiert ist, dass sie an der äußeren Vorderseite des Mauerwerks eines Deichs (D) mit senkrechter Vorderseite (F) angeordnet und verankert werden kann.

3. Eine Anlage gemäß Anspruch 1), wobei das Führungsrohr (1, 1') außen und zumindest an dem beschichteten Abschnitt mit einer gegenüberliegenden Struktur (3) ausgerüstet ist, welche so konstruiert ist, dass sie an einer Gehäuse- und Tragstruktur (104) verankert werden kann, welche an entsprechenden Fundamentpfosten (5) befestigt ist, die sicher in den Meeresboden getrieben werden, und zwar vorzugsweise an der äußeren Vorderseite eines aus großen Steinbrocken bestehenden Deichs (D').

4. Eine Anlage gemäß Anspruch 1), wobei das Führungsrohr (1) in den Meeresboden getrieben ist, und zwar vorzugsweise an der äußeren Vorderseite eines aus großen Steinbrocken (D') bestehenden Deichs, so dass es sicher in der Nutzungsstellung verankert wird, und zwar mit oder auch ohne irgendeine strukturelle Verbindung mit dem genannten Deich (D').

5. Eine Anlage gemäß Anspruch 1), wobei das Führungsrohr (1, 1') jeweils am Boden mit entsprechenden Öffnungen (6) versehen ist, um die Ablagerung von Sand bei dem eingebetteten Abschnitt des genannten Führungsrohrs zu beschränken oder zu vermeiden und/oder um regelmäßige innere Reinigungen des genannten Führungsrohrs (1, 1') zu vereinfachen.

6. Eine Anlage gemäß Anspruch 1), wobei das Führungsrohr (1, 1') innen mit Längsführungen (8) ausgerüstet ist, welche sich durch beide, den beschichteten und den eingebetteten Abschnitt des genannten Führungsrohrs erstrecken und über die sich der Schwimmer (16) axial geführt bewegt; der genannte Schwimmer (16) kann dabei außen jeweils mit Teilen ausgerüstet sein, welche einen niedrigen Reibungskoeffizienten aufweisen und auswechselbar sind, um die Bewegung des genannten Schwimmers über diese Führungen (8) zu erleichtern.

7. Eine Anlage gemäß Anspruch 6), wobei die genannten Führungen (8) teilweise die Öffnung des genannten Fensters (7) zum Einlass der Welle in das Führungsrohr (1, 1') durchqueren und als Schutzgitter oder Halterungen für das genannte Gitter wirken, das vermeidet, dass Fremdkörper in das Führungsrohr (1, 1') geraten.

8. Eine Anlage gemäß Anspruch 1), wobei die genannten beweglichen (14) und feststehenden (11) Rohrleitungen der Pumpeinheit verwendet werden können, um mechanische Energie für beliebige Zwecke zu erzeugen, bei Nutzung der geradlinigen und relativen Beweglichkeit der genannten Rohrleitungen und jedes Mechanismus, welcher diese genannte geradlinige Bewegung in die Lage versetzt, in eine Rotationsbewegung umgewandelt zu werden, zum Beispiel mit einer Zahnstange (24) und einem Ritzel (25).

9. Eine Anlage gemäß Anspruch 1), wobei die genannten beweglichen (14) und feststehenden (11) Rohrleitungen der Pumpeinheit verwendet werden können, um elektrische Energie zu erzeugen, indem man die geradlinige und relative Beweglichkeit der genannten Rohrleitungen und jede beliebige Einrichtung nutzt, die die genannte geradlinige Bewegung in die Lage versetzt, in elektrische Energie umgewandelt zu werden, zum Beispiel über einem elektromagnetischen Gerät mit vorzugsweise feststehenden Spulen (26) und beweglichen Magneten (27).

10. Eine Anlage gemäß Anspruch 1), wobei mindestens ein Schleusentor (23) an dem Führungsrohr (1, 1') im Bereich des seitlichen Fensters (7) vorgesehen ist, mit der Möglichkeit manueller oder servogesteuerter Bewegung, um die Weite der Öffnung des genannten Fensters (7) zu regulieren, den Betrieb der Anlage den unterschiedlichen Meeresverhältnissen anzupassen und die Systeme im Innern der Führungsrohre (1, 1') auch bei schwerem Seegang zu neutralisieren und zu schützen.

## Revendications

1. Installation pour exploiter l'énergie des vagues, en particulier pour la production d'énergie électrique, comprenant un flotteur connecté à un composant inférieur mobile d'une unité de pompage qui se déplace axialement dans un corps fixe qui tire à partir de la mer et est conçu pour aspirer de l'eau après l'abaissement du flotteur et qui, simultanément au soulèvement dudit flotteur par la vague, pompe de l'eau et l'achemine vers un équipement d'exploitation, par exemple des moyens de conversion hydroélectrique (20, 22), dans laquelle ledit flotteur (16) se déplace, guidé latéralement, dans un tube de guidage (1, 1') avec sont extrémité inférieure immergée dans la mer et l'autre extrémité orientée vers le haut, fixée à n'importe quels moyens de support appropriés et pourvue latéralement d'au moins une fenêtre (7) positionnée au niveau de la mer, dans laquelle ledit flotteur est normalement situé et à travers laquelle la vague pénètre pour soulever et abaisser ce même flotteur, ledit flotteur étant axialement solidaire d'un conduit mobile (14) qui s'étend vers le bas pour tirer de l'eau de la mer à travers de moyens de vanne d'aspiration (15) et qui croise axialement ledit flotteur pour permettre l'entrée dans celui-ci d'un conduit de pompage fixe (11) qui, via des moyens de vanne de décharge (12), est connecté au sommet d'un tube fixe (9) positionné sur l'extrémité supérieure dudit tube de guidage (1, 1') pour le refoulement de l'eau pompée par ledit système de conduits fixe et mobile (11, 14) actionnés par le flotteur (16) et équipés desdits moyens de vanne (12, 15), étant prévu que ledit tube fixe (9) soit profilé avec une forme de coude, et que ledit tube (9) et/ou ledit conduit fixe (11) soient soutenus par une structure de support (3, 10) positionnée dans la partie émergeante supérieure dudit tube de guidage (1, 1'), de manière que, en agissant facilement sur ladite structure de support (3, 10), l'ensemble pompe-flotteur puisse être retiré pour la maintenance et il soit possible d'accéder à l'intérieur dudit tube de guidage (1, 1') pour toutes les exigences de maintenance et/ou de nettoyage.

2. Installation selon la revendication 1, dans laquelle le tube de guidage (1, 1') est muni extérieurement et au moins sur la portion émergeante d'une structure de revêtement (3) conçue pour être fixée à une structure de logement et de support (4) conçue à son tour pour être positionnée et fixée sur la façade extérieure de l'ouvrage de maçonnerie d'une digue (D) avec façade verticale (F).

3. Installation selon la revendication 1, dans laquelle le tube de guidage (1, 1') est muni extérieurement et au moins sur la portion émergeante d'une structure de revêtement (3) conçue pour être fixée à une structure de logement et de support (104) fixée à des piliers de fondation (5) solidement ancrés dans le fond marin, de préférence sur la façade extérieure d'une digue réalisée avec des blocs rocheux (D').

4. Installation selon la revendication 1, dans laquelle ledit tube de guidage (1) est ancré dans le fond marin, de préférence sur la façade extérieure d'une digue réalisée avec des blocs rocheux (D'), de manière qu'il soit solidement fixé dans la position d'utilisation, avec ou également sans une quelconque connexion de structure avec ladite digue (D').

5. Installation selon la revendication 1, dans laquelle le tube de guidage (1, 1') est pourvu au bas d'ouvertures (6) pour limiter ou éviter le dépôt de sable dans la portion immergée dudit tube de guidage et/ou pour faciliter le nettoyage interne périodique dudit tube de guidage (1, 1').

6. Installation selon la revendication 1, dans laquelle ledit tube de guidage (1, 1') est doté intérieurement de guides longitudinaux (8) s'étendant à la fois à travers la portion émergeante et immergée dudit tube de guidage et sur lesquels le flotteur (16) se déplace, guidé axialement ; ledit flotteur (16) peut être équipé extérieurement de pièces ayant un faible coefficient de frottement, remplaçables, pour faciliter le mouvement dudit flotteur sur lesdits guides (8).

7. Installation selon la revendication 6, dans laquelle lesdits guides (8) traversent partiellement l'ouverture de ladite fenêtre (7) pour l'entrée de la vague dans le tube de guidage (1, 1') et agissent comme une grille protectrice ou des supports pour ladite grille qui empêche l'entrée de corps étrangers dans le tube de guidage (1, 1').

8. Installation selon la revendication 1, dans laquelle lesdits conduits mobile (14) et fixe (11) de l'unité de pompage peuvent être utilisés pour produire une énergie mécanique pour n'importe quelle utilisation, en exploitant la mobilité rectiligne et relative desdits conduits et n'importe quel mécanisme qui permet audit mouvement rectiligne d'être converti en un mouvement de rotation, par exemple avec un mécanisme à crémaillère (24) et pignon (25).

9. Installation selon la revendication 1, dans laquelle lesdits conduits mobile (14) et fixe (11) de l'unité de pompage peuvent être utilisés pour produire de l'énergie électrique, en exploitant la mobilité rectiligne et relative desdits conduits et n'importe quel équipement qui permet audit mouvement rectiligne d'être converti en énergie électrique, par exemple via un appareil électromagnétique avec de préférence des bobines fixes (26) et des aimants mobiles (27).

10. Installation selon la revendication 1, dans laquelle au moins une vanne écluse (23) est disposée sur le tube de guidage (1, 1') dans la zone de la fenêtre latérale (7), avec la possibilité de mouvement manuel ou asservi, pour régler la largeur de l'ouverture de ladite fenêtre (7), pour adapter le fonctionnement de l'installation aux conditions variables de la mer et pour neutraliser et protéger les systèmes à l'intérieur des tubes de guidage (1, 1') par grosse mer.
